(19) Europäisches Patentamt
European Patent Office
Office européen des brevets

(11) **EP 1 852 792 B1**

(12) **EUROPEAN PATENT SPECIFICATION**

(45) Date of publication and mention
of the grant of the patent:
**17.04.2013 Bulletin 2013/16**

(51) Int Cl.:
***G06F 17/30*** *(2006.01)*

(21) Application number: **07110370.9**

(22) Date of filing: **08.07.2003**

(54) **Method and computer system for query processing**

Verfahren und System zur Abfrageverarbeitung

Méthode et système pour le traitement d'une requête

(84) Designated Contracting States:
**AT BE BG CH CY CZ DE DK EE ES FI FR GB GR HU IE IT LI LU MC NL PT RO SE SI SK TR**

(43) Date of publication of application:
**07.11.2007 Bulletin 2007/45**

(62) Document number(s) of the earlier application(s) in
accordance with Art. 76 EPC:
**03015365.4 / 1 496 449**

(73) Proprietor: **SAP AG**
**69190 Walldorf (DE)**

(72) Inventors:
• **Von Bergen, Axel**
**Wiesloch 69168 (DE)**
• **Sauermann, Volker**
**Dossenheim 69221 (DE)**
• **Schwarz, Arne**
**Walldorf 69190 (DE)**

(74) Representative: **Rocke, Carsten et al**
**Müller-Boré & Partner**
**Grafinger Strasse 2**
**81671 München (DE)**

(56) References cited:
**WO-A-01/18742       WO-A-02/061612**
**US-A- 5 845 276       US-A- 5 893 088**

• **"MULTIPLE INDEXED ACCESS PATH IN A RELATIONAL DATABASE SYSTEM" IBM TECHNICAL DISCLOSURE BULLETIN, IBM CORP. NEW YORK, US, vol. 32, no. 10B, 1 March 1990 (1990-03-01), pages 388-392, XP000097927 ISSN: 0018-8689**

**Description**

Field of the Invention

The present invention generally relates to electronic data processing, and more particularly, relates to methods, computer program products and systems for data retrieval.

Background of the Invention

The patent application PCT/EP02/01026 discloses a data structure that can be used in a data storage system to support a fast query process. However, the referenced application discloses the fast query process with respect to a single condition. Normally, Boolean expressions include multiple complex select statements that have to be evaluated.

Document WO 02/061612 A discloses a database structure for storage of data within a computer system, with at least one data element of a first type associated with data elements of a second type, representing database entries, and data elements of a third type, associated with said data elements of the second type, wherein the data elements of the second type are arranged in a first tree structure, and wherein the data elements of the third type are arranged in a second tree structure.

Document WO01/1 discloses a method of relational processing, comprising the steps of querying one or more databases of records to return one or more threads of parallel words; generating one or more intermediate vectors of serial bit streams from the one or more threads with a collection generator; and processing the one or more intermediate vectors with a relational processor, the relational processor performing one or more logical operations thereon in a single pass, and outputting a contiguous serial bit stream.

Summary of the Invention

A goal of the invention is to provide a method, data storage system and computer program product to retrieve data from the data storage system in response to a query that includes a Boolean expression having multiple conditions or even nested select statements.

This goal is met by embodiments of the invention according to the claims 16.

Further, these embodiments can be implemented for showing an optimal data retrieval performance when the query leads to a relatively small number of hits. Boolean operators can be applied to result sets without a need to access corresponding data records.

These embodiments can be implemented for showing an optimal data retrieval performance when the query leads to a relatively large number of hits according to the claims 1 to 6. By using bitmaps to represent result sets, memory consumption is reduced because a result flag instance consumes considerably more memory than a bit.

Another goal is to provide method, data storage system and computer program product to reduce memory consumption for data retrieval when the Boolean expression has a simpler structure.

Further, these embodiments can be used to implement a "Lean AND" mechanism.

The aspects of the invention will be realized and attained by means of the elements and combinations particularly pointed out in the appended claims. Also, the described combination of the features of the invention is not be understood as a limitation, and all the features can be combined in other constellations without departing from the spirit of the invention. It is to be understood that both the foregoing general description and the following detailed description are exemplary and explanatory only and are not restrictive of the invention as described.

Brief Description of the Drawings

| | |
|---|---|
| FIG. 1 | is a simplified block diagram of a computer system that can be used with an embodiment of the invention; |
| FIG. 2 | is a diagram of a static hierarchical data structure used in one embodiment of a data storage system according to the invention; |
| FIG. 3 | schematically shows the initial state of an anchor as used in the data structure; |
| FIG. 4 | illustrates the use of the anchor for the implementation of an InfoType; |
| FIG. 5 | illustrates adding an InfoCell to the data structure; |
| FIG. 6 | illustrates the structure that is obtained when multiple InfoTypes are put into the data structure; |
| FIG. 7 | shows an InfoCourse that contains data; |
| FIG. 8 | illustrates multiple InfoCourse paths in the data structure; |
| FIG. 9 | illustrates how to retrieve data from the data storage system when operated according to the invention; |
| FIG. 10 | illustrates how two result sets can be merged into a single result set when applying the Boolean OR operator; |
| FIG. 11 | illustrates how two result sets can be merged into a single result set when applying the Boolean AND operator; |
| FIG. 12 | illustrates a first implementation for the result flags and the result sets; |
| FIGs. 13 | illustrates a second implementation for the result flags and the result sets; |
| FIG. 14. | illustrates how result flags relate to corresponding IC-anchors in the second implementation; |

FIG. 15 illustrates, how Boolean operators can be applied to the result sets in the second implementation;

FIG. 16 is a simplified block diagram of software components of the computer system to dynamically select a data retriever implementation;

FIG. 17 illustrates initialising threshold values; and

FIG. 18 illustrates dynamically adjusting threshold values.

Detailed Description of the Invention

In the following, an example of a data (storage) system is described that can be used together with an embodiment of the invention. The data system may be implemented according to a relational database model. However, the system is not limited to use within the constraints of a known relational database architecture. The elements of the data system roughly translate to the known nomenclature of the relational database theory as follows (with the definitions used with an embodiment of the invention on the left):

InfoSystem ← Management System
InfoArea ← Database
InfoCluster ← Table
InfoType ← Attribute
InfoCourse ← Data record
InfoCell ← Field

Further definitions of terms, as used hereinafter:

Boolean operators:
operators used in Boolean statements, e.g., AND, OR.

Relational operators:
operators used in relational statements, e.g.,
< (less than)
<= (less than or equal to)
> (greater than)
>= (greater than or equal to)
= (equal to)
<> (not equal to)
or any other operator that can be used to express a relation between two values.

Condition:
relational statement comparing data, such as numerical data or alphanumeric data, using one or more relational operators.

Boolean expression:
statement including multiple conditions that are combined using Boolean operators.

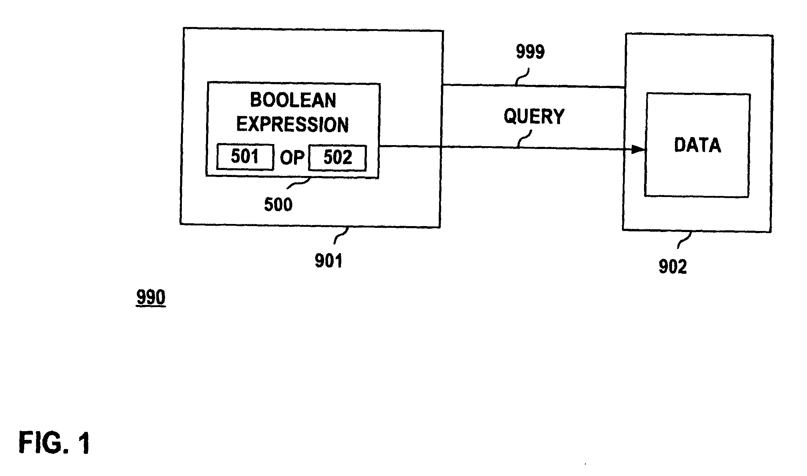

FIG. 1 is a simplified block diagram of a computer system 990 that can be used with an embodiment of the invention. The computer system 990 includes multiple computing devices (e.g., first computing device 901 and second computing device 902) that communicate over a network 999, such as a local area network (LAN), wide area network (WAN), the Internet, or a wireless network.

For example, the second computing device 902 may be a backend system, such as a database system, a file system or an application system, that stores data. The data can also be stored anywhere inside or outside of the computer system 990.

The first computing device 901 may be used to compose Boolean expressions 500 to be used in a QUERY for retrieving selected data from the second computing device 902. For example, the first computing device 901 may be a front end computer that provides a graphical user interface (GUI) to a user.

There can be various ways in which the data storage system 902 receives the QUERY, dependent on the interfaces offered for the data storage system 902. For example, in case of using an SAP R/3 based system, the SAP Remote Function Call (RFC) functionality provided by the ABAP kernel can be used. An application programming interface (API) can be implemented as a collection of ABAP Function Modules. The API uses the RFC functionality to communicate remotely with the data storage system. An SAP R/3 based application uses the API for receiving parameters that are passed to the data storage system 902. The corresponding results are then returned as ABAP parameters. A selection query is filled into an internal table in ABAP and can be rapidly processed by the data storage system since the query is already pre-structured.

In general, any interface or meta format can be used to post a Query to the data storage system. A pre-structured query is useful but not necessary. The query may also be coded in XML or simply be passed to the data storage system as a string that has to be parsed within the data storage system.

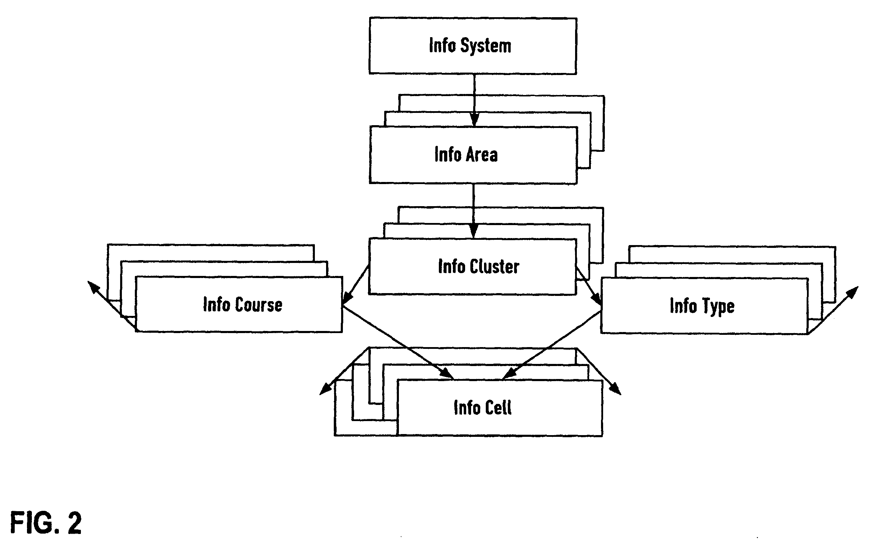

FIGs. 2 to 8 explain details of one embodiment of the data storage system 902. For example, as described in the patent application PCT/EP02/01026, the data storage system 902 can be configured as a fast cache with all data structures residing in its main memory. The Boolean expression 500 can include at least a first portion 501 and a second portion 502, each portion representing a selection condition of any degree of complexity applicable to the data structures in the main memory. Further portions may be included. The portions are combined through logical or relational operators (OP).

FIG. 2 is a diagram of a static hierarchy structure used in one embodiment of the data storage system 902. Each box in the structure corresponds to an instance of the data type that is used as a label for the box. Multiple overlapping boxes illustrate multiple instances of the same data type. A single arrow between instances of different data types stands for an arbitrary number of arrows between multiple instances at each corresponding level of the structure. In the following, the data type labels are used to refer to corresponding instances of the data type. The highest level in the structure is the InfoSystem level. Down from the top level one or more InfoAreas are connected to the InfoSystem. The InfoSystem provides algorithms necessary to operate the data storage system in run time. The InfoSystem is connected to any number of InfoAreas through a linking element, which will be described hereinafter as an anchor. These InfoAreas can for example refer to logical units of the InfoSystem.

Each InfoArea is connected via a linking element (again an anchor as described hereinafter) to an InfoCluster. In turn, each InfoCluster is connected to at least one InfoCourse and at least one InfoType, through respective linking elements, such as anchors. The InfoType can be seen as an attribute of a table; an InfoCourse starts always in an InfoCluster. If an InfoCourse stays within an InfoCluster with its addressed InfoCell elements corresponding to fields of a table, then the InfoCourse is similar to a record of a table, such as a relational database table.

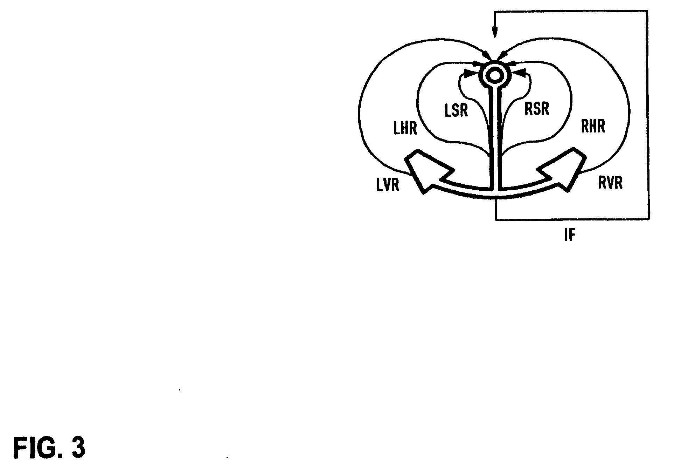

Under the InfoCourse and the InfoType the InfoCell is found; this is the element on the lowest level in the hierarchical structure. On the creation of an InfoType an anchor is created that is an InfoCell also. This anchor has the function to represent the structure of following InfoCell elements (cf. FIG. 3).

For the implementation of the levels below the InfoArea level, i.e. the InfoCluster, the InfoCourse, the InfoType, and the InfoCell levels, use is made of a data element according to the invention as shown in FIG. 3. In this example, the data element is shown schematically as an anchor, and is provided with a number of pointers. The pointers of the first pair are labelled LVR and RVR (Left Vertical Ring, respectively Right Vertical Ring), the pointers of the second pair are labelled LHR and RHR (Left Horizontal Ring, respectively Right Horizontal Ring), the pointers of the third pair are labelled LSR and RSR (Left Self Ring, respectively Right Self Ring), and the single pointer is labelled IF (InFormation bridge). Note that the pointers LSR, RSR and IF are in principle optional. In the initial state, as shown in FIG. 3, all pointers point to the anchor. This initial state is also the simplest of possible ring structures. Every pointer in the structure has a valid address, and cases of a non defined pointer (nil pointer) are avoided.

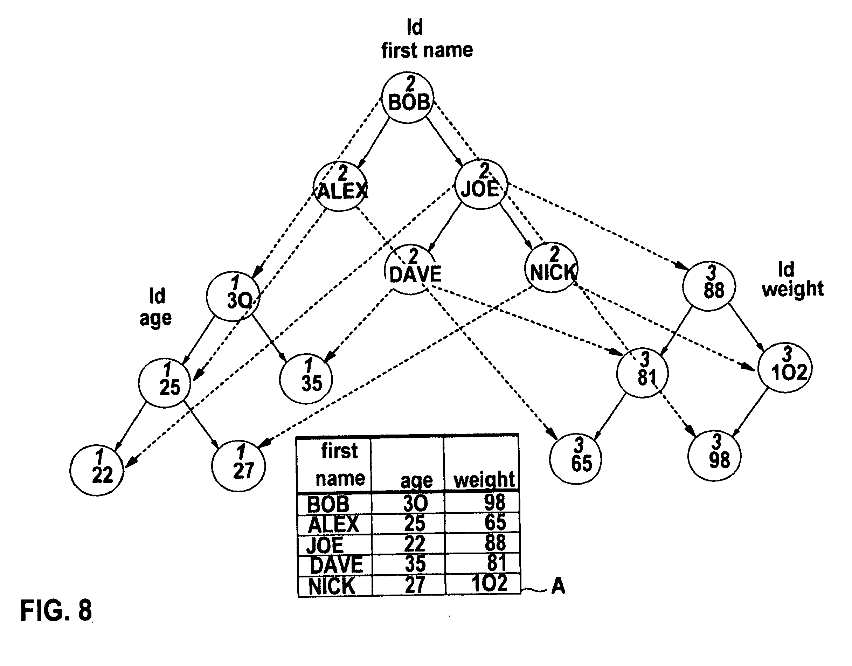

In the following, example data is used as shown in table A of FIG. 8. The table includes data regarding first names, ages and weights. For this table an InfoCluster is generated. Furthermore, three InfoTypes are generated to represent respectively first names, ages, and weights.

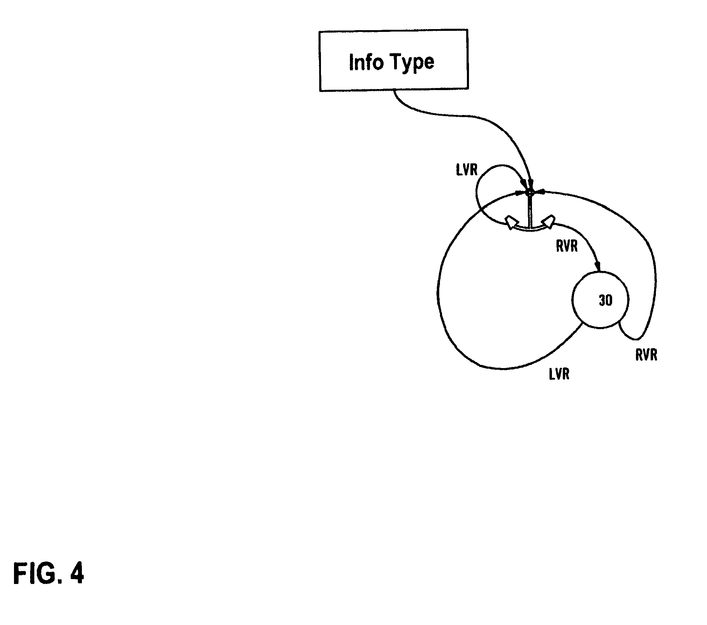

FIG. 4 illustrates the use of the data element for the implementation of the InfoType. In the InfoType, semantic information is included, such as, the data type (in this example "INTEGER"), field name (in this example "age")), etc. The InfoType has an anchor associated with the InfoType. The anchor points with its RVR pointer to the actual information carrier, that is the InfoCell. The InfoCell is as described above the lowest level entity within the data system. The InfoCell holds the information, as shown in FIG. 4; in this example "age is 30 in INTEGER".

As described above, the InfoCell is provided with a LVR/RVR pointer pair. As shown in FIG. 4, the RVR pointer of the InfoCell points towards the anchor, and also the LVR pointer points to the anchor. As a result, the ring configuration of the anchor is maintained.

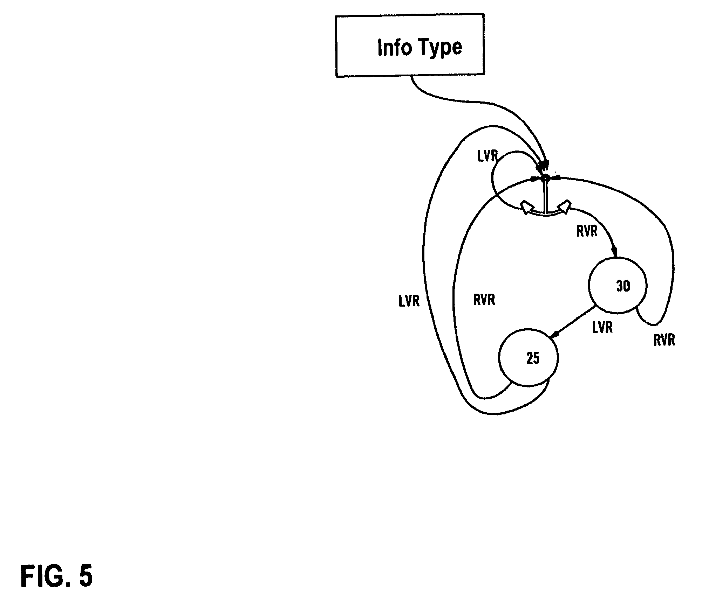

FIG. 5 illustrates how a further InfoCell is added to the data structure. The InfoCell (with the value "25") is inserted in the LVR ring after the first InfoCell. The LVR and RVR pointers of the InfoCell point to the anchor, as to maintain a closed ring.

The order in which the InfoCells are organized depends on their value. In case of a smaller value, the InfoCell is ordered in on the LVR side, otherwise on the RVR side. This practise is well known in the art as binary tree building. Preferably, the binary trees are organized as balanced or AVL trees, methods which are well known in the art. These kinds of trees minimise the number of levels within the tree structure, so as to minimize access time. Preferably, all tree structures within the data system are dynamically balanced in use, so as to guarantee optimum access times.

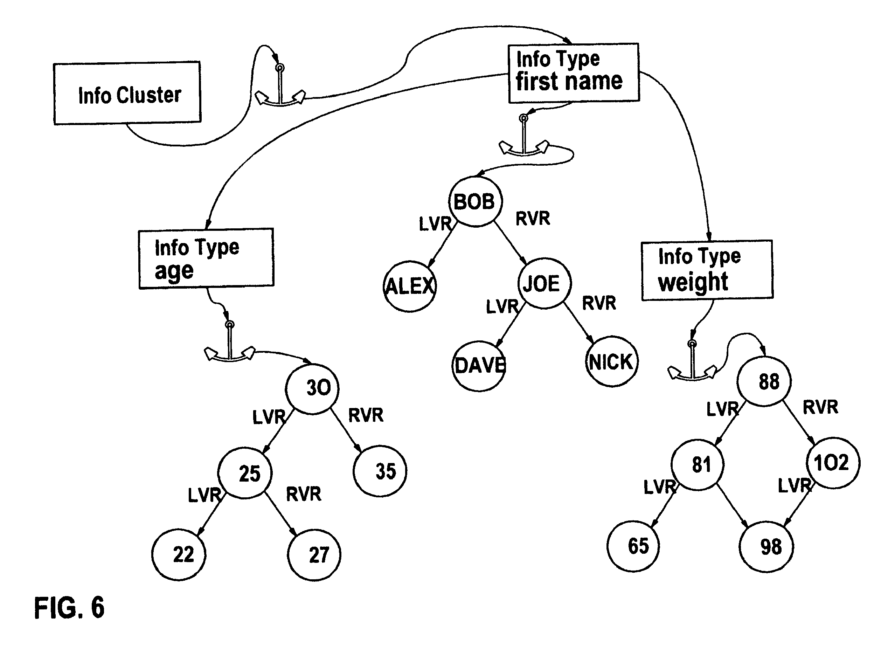

FIG. 6 illustrates the structure that is obtained when all InfoTypes of the table A are put into the data structure. In total, three InfoTypes are present; age, first name, and weight. Note that the end pointers of each last element in the respective trees are not shown. Under each anchor of the InfoType, the InfoCells are organised in a binary tree. The InfoCluster points to an anchor which in turn points to a first InfoType. The first InfoType in turn points to the other two InfoTypes. Each InfoType points to an anchor. The anchor has the additional function of a marker, that can be used by an access or query process as a break or return sign.

To complete the implementation of the table, the relations between the InfoType have to be made. To this end an InfoCourse is introduced.

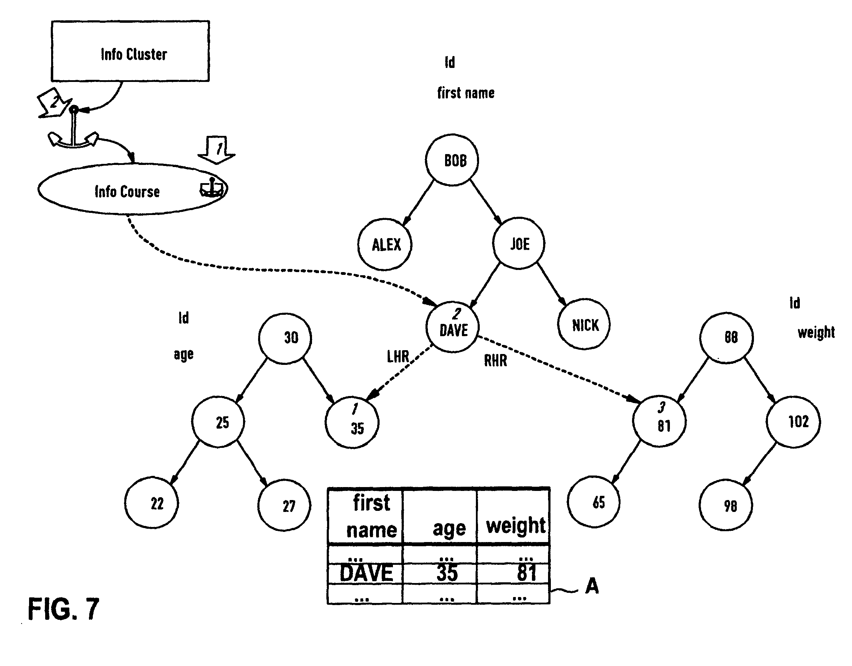

FIG. 7 shows the InfoCourse that contains the data for a row of the table A. Use is made of the LHR and RHR pointers. The end pointers again point back to the anchor of the InfoCourse to maintain the ring structure. Note that the InfoCourse also forms a binary tree, sorted by the ID numbers of the InfoTypes. Note that the ID numbers of the InfoTypes are unique. For example, integer values are used for the ID numbers.

FIG. 8 illustrates all the InfoCourse paths (for example implemented using pointers) for the table A. Note that all InfoCells have been provided in the top section with their respective InfoType Id number, over which the binary tree configuration of the InfoCourse via the LHR/RHR pointers is organized. Elements that belong to an InfoType are connected by solid arrows. Elements that belong to an InfoCourse are connected by dashed arrows.

When five million records with 100 attributes (e.g., 100 columns of a relational database table) are loaded into the data storage system 902, then five million InfoCourse trees (InfoCourses) exist, one for each record. Each InfoCourse includes 100 nodes. Each Info-Course has a corresponding InfoCourse anchor pointing to the respective InfoCourse. In other words, when loading five million records into the data storage system 902 then also five million InfoCourse anchors exist.

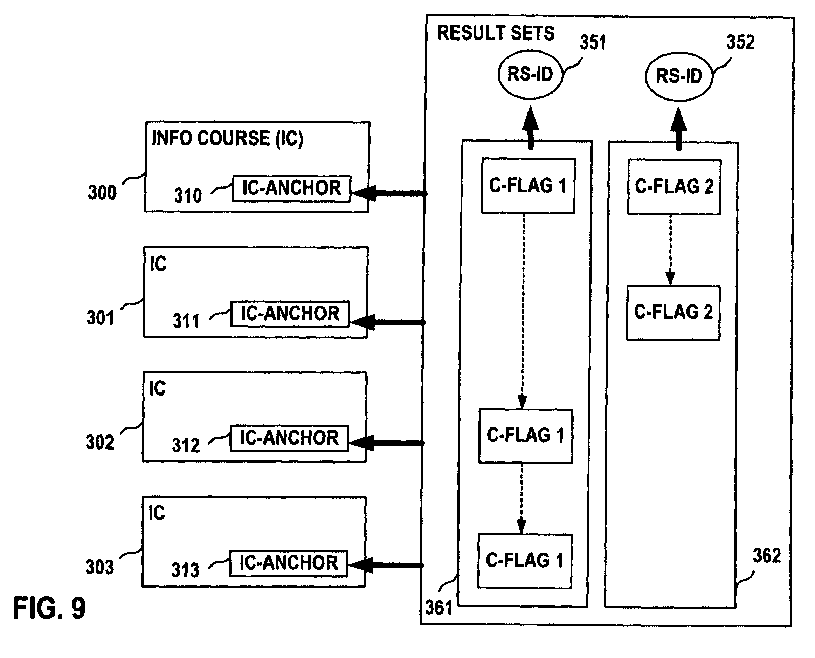

FIG. 9 illustrates how a computer implemented method can be used to retrieve data from the data storage system 902 when operated according to the invention. It is assumed that the data storage system 902 stores the data using the data structure as described in FIGs. 2 to 8. Note that in this data structure each InfoCourse 300, 301, 302, 303 has an InfoCourse anchor 310, 311, 312, 313.

Once the Boolean expression is received by the data storage system 902 (cf. FIG. 1), a parser decomposes the Boolean expression 500 into the first portion 501 (cf. FIG. 1) and the second portion 502. If further portions are included they are also subject to decomposition. Each portion includes at least one condition that has to be fulfilled by any InfoCourse that is selected by the original query. The conditions relate to InfoTypes.

The data storage system 902 then determines a result set for each portion. In the example, a first result set 361 includes result flags (C-FLAG1) in compliance with the first portion 501 and a second result set 362 includes further result flags (C-FLAG2) in compliance with the second portion 502. A result flag is used to indicate whether a specific InfoCourse fulfils a condition in a corresponding portion. Each result flag relates (bold up-arrows) to a result identification number 351, 352 of the corresponding result set 361, 362, where it belongs to. The result flags within a result set are also interrelated (dashed arrows). Further, each result flag relates (bold left-arrows) to the corresponding InfoCourse anchor (IC-anchor) 310, 311, 312, 313 of the InfoCourse fulfilling the corresponding condition.

The two result sets 361, 362 can originate from the evaluation of a complex Boolean expression, where the first result set 361 can be the result of one bracket including potentially any Boolean sub-expression as sub-query. The same is true for the second result set 362, e.g. representing another bracket of the Boolean expression.

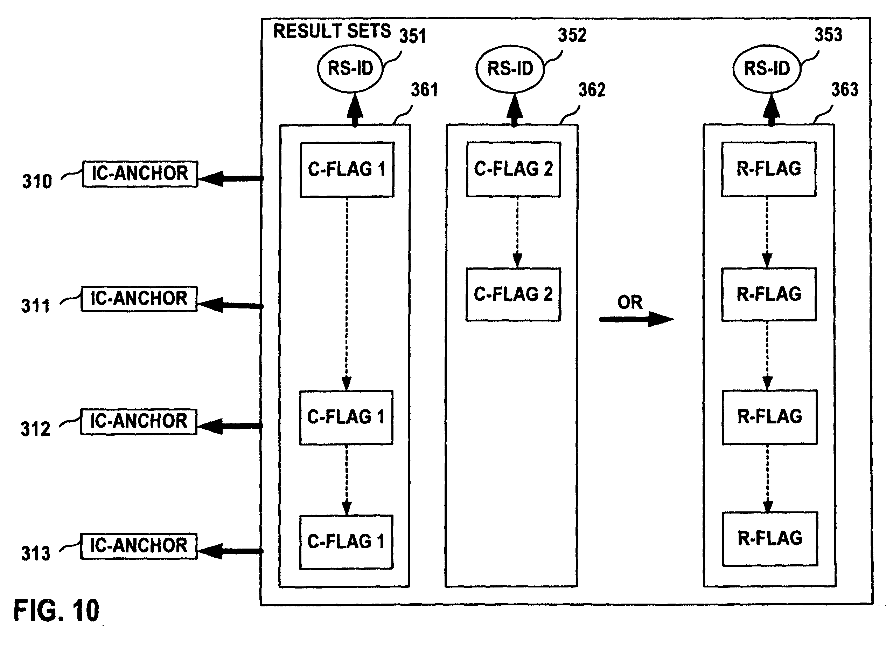

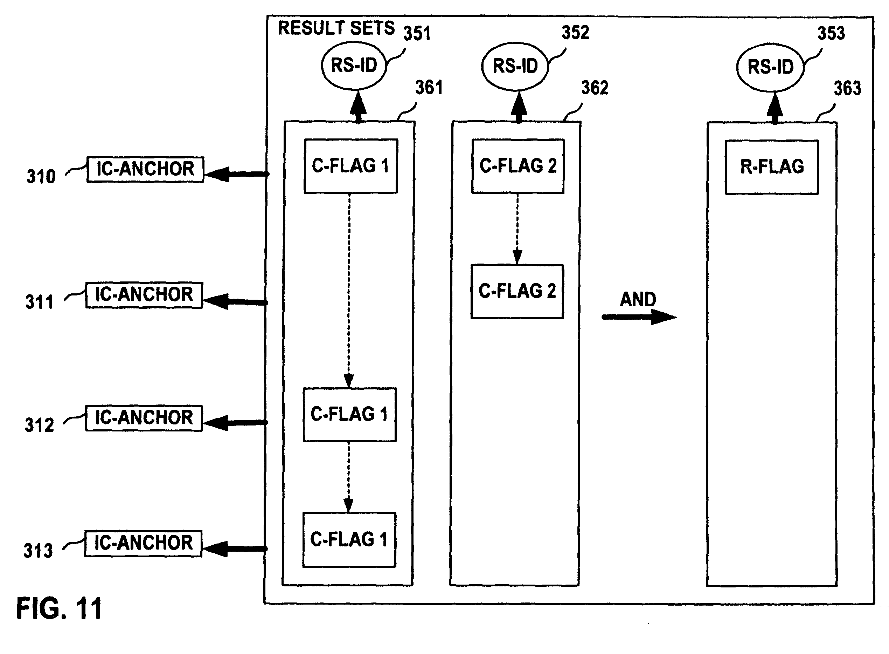

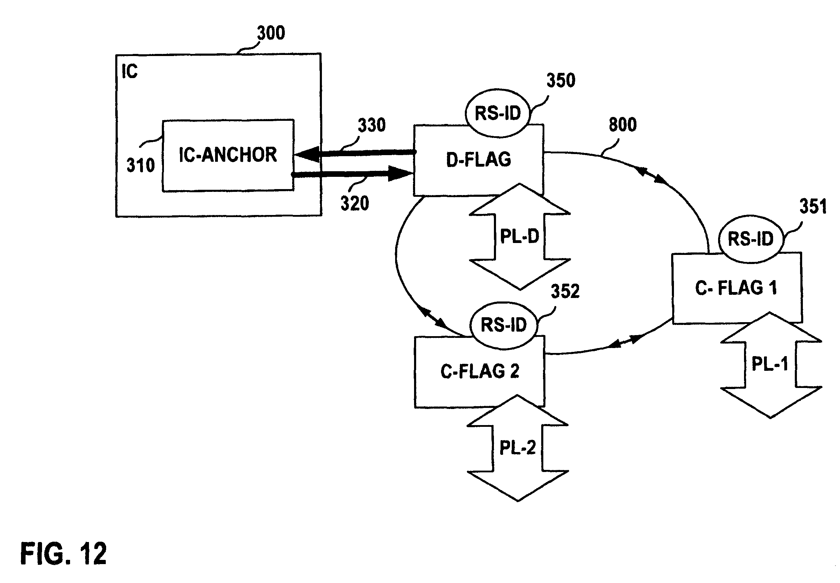

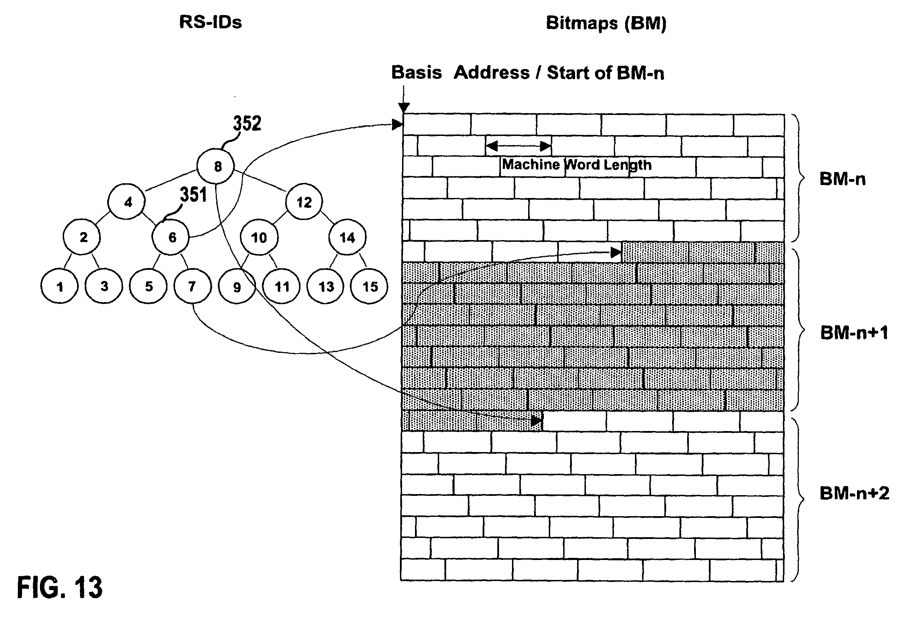

FIGs. 10 and 11 illustrate how the first and the second result sets 361, 362 can be merged into a single result set 363 when applying corresponding Boolean operators to the result flags of the corresponding Info-Course anchors. One implementation example using pointer lists is explained in more detail in FIG. 12. Another implementation example using bitmaps is explained in more detail in FIGs. 13 to 15.

In the example of FIG. 10, the Boolean expression 500 combines the first and second result sets with a Boolean OR operator.

For the combination, the InfoCourses or the IC-anchors are not needed anymore. The number of result flags in each result set is known by, for example, incrementing a corresponding counter when creating the result flags.

In one implementation, the data storage system runs through one of the result sets from the first to the last result flag. Advantageously, the result set including the lowest number of result flags is chosen because of a shorter processing time, which becomes more relevant in the case of Boolean AND combinations. The first result set 361 includes three result flags (C-FLAG1) and the second result 362 set includes two result flags (C-FLAG2). Therefore, the data storage system starts with the second result set 362 and then processes the first result set 361. In one implementation, for each IC-anchor where a result flag C-FLAG1 or C-FLAG2 relates to, a corresponding result flag R-FLAG is generated in the third result set 363 with having result identification number 353.

In another implementation, one can use also the first or second result set for storing the result of the Boolean OR operation.

For example, when running through the second result set 362, each C-FLAG2 can be "renamed" into C-FLAG1. The result ID 352 of the second result set is set to the result ID 351 of the first result set.

Further, it is checked whether a corresponding C-FLAG1 result flag exists. If not, the data storage system proceeds with the next C-FLAG2 in the second result set 362. If a corresponding C-FLAG1 exists, then one of these two result flags, either in the first or in the second result set, is deleted to avoid intersections.

To find out, whether a corresponding C-FLAG1 exists in the first result set 361, for example, the data storage system moves along a circular structure that is used to relate the result flags to their corresponding IC-anchor.

After having processed all result flags of the first and second result sets, only C-FLAG1 result flags remain. The combination with OR means to link the two result sets together to one result set. In this example, in the end, all result flags have the result ID 351 of the first result set 361. During the above described procedure the Counters for the number of result flags in each result set are continuously updated (e.g., decremented when result flags are deleted). Therefore, the number of result flags in the "final" result set is the sum of the counters of the first and second result sets just prior to lining them together. This count result can be reported to an application as the number of InfoCourses (records) matching the first portion 501 or the second portion 502 of the Boolean expression 500.

The "final" result set may represent a real final result set or an intermediate result when the Boolean expression 500 includes further portions. In this case, it is combined again with further result sets that correspond to the further portions. A complex query consisting of several nested sub-queries may be evaluated recursively by combining the result sets of sub-queries with the result sets of other sub-queries. This continues until all levels of the Boolean expression are resolved. At the end, a single result ; set (e.g., result set 363) is left. Its number of result flags corresponds to the number of hits for the whole query (Boolean expression 500).

In the example of FIG. 11, the Boolean expression 500 combines the first and second result sets with a Boolean AND operator.

Again, the data storage system knows the number of result flags in each result set from the corresponding result counters and starts with processing the result set with the lowest number of result flags. This is advantageous in the case of Boolean AND combinations because the total number of result flags can only be as large as the smallest result set. In the example of FIG. 11 the second result set 362 is the smaller one.

For each IC-anchor, where a result flag C-FLAG1 and also a result flag C-FLAG2 relate to, a corresponding result flag R-FLAG is generated in the third result set 363.

In one implementation, one can use also the first or second result set for storing the result of the Boolean AND operation.

For each result flag C-FLAG2 of the second result set 362, the data storage system checks whether a corresponding result flag C-FLAG1 exists in the first result set 361. If so, the result flag C-FLAG2 is the data storage system proceeds with the next result flag of the second result set. If no corresponding result flag C-FLAG1 is found in the first result set, then the result flag C-FLAG2 in the second result set 362 is deleted.

At the end of this filtering procedure, the second result set 362 includes the "final" result set and, therefore, plays the role of the third result set 363. The first result set 361 is not needed any more and can be deleted.

Again, with each deletion of a result flag, the corresponding counter is reduced accordingly. Therefore, the counter of the second result set always contains the current number of result flags C-FLAG2, which, at the end of the filtering procedure, corresponds to the number of hits for the query and may be reported to an Application.

As in the Boolean OR case, the "final" result set may represent a real final result set or an intermediate result when the Boolean expression 500 includes further portions that are subject to further combinations.

FIG. 12 illustrates a first implementation for the result flags C-FLAG1, C-FLAG2 and the result sets.

In this first implementation, the data storage system instantiates an instance (C-FALG1, C-FLAG2) of a result flag class for each result flag. Multiple result flags for one InfoCourse 300 (record) are connected in a ring structure 800. The ring structure 800 relates 330, 320 to the corresponding IC-anchor 310. Advantageously, a docket element (D-FLAG) is used. The docket element represents a counterpart of the IC-anchor 310 on the side of the result flags. One advantage is that the docket element is decoupled from the IC-anchor in the sense that it is derived from a different class than the IC-anchor. Therefore, it can provide different functions than the IC-anchor. These functions can be used by the other result flags because the docket element is instantiated from the same class as the result flags. The decoupling allows instances from the result flag class to consume less memory than a corresponding IC-anchor that has, for example, more pointers, additional administrative information (e.g., number of elements in a substructure), methods that operate on attributes, such as "sort elements" or "balance tree", etc. The docket element D-FLAG has a docket pointer 330 pointing at the corresponding IC-anchor 310, whereas the IC-anchor 310 has an anchor pointer 320 pointing at the corresponding docket element. Using the ring structure 800 the data storage system can quickly identify any result flag related to a specific IC-anchor.

To summarize, each InfoCourse has one IC-anchor that relates to a corresponding docket element. That is, an InfoCourse (record) 300 is represented by an IC-anchor 310 and the corresponding docket element D-FLAG. The docket element is the docking point for the result flags C-FLAG1, C-FLAG2. A result flag semantically plays the role of a dynamic flag. If a result flag is connected to a docket element, the InfoCourse, which is represented by the docket element, has been selected. That is, it fulfils one ore more conditions of the original query.

Multiple result flags that relate to different IC-anchors may be linked together in a pointer list by means of pointers (e.g., pUp and pDown). This is also valid for the docket elements, since technically speaking they are also instances of the result flag class. A linear list of result flags is called a result set. Each result set is identified by a result ID. A result set flags a subset of InfoCourses that comply with at least portion of the Boolean expression 500 in the query.

In the example, the first result set 361 is implemented by the first pointer list PL-1 that includes the result flag pointers C-FLAG1 and has the result ID 351. The second result set 362 is implemented by the second pointer list PL-2 that includes the result flag pointers C-FLAG2 and has the result ID 352. The docking elements formally are also linked in a pointer list PL-D having its own result ID 350.

Several result sets may exist simultaneously. On the level of a docket element D-FLAG, the result flags can be linked in the circular structure 800 using pointers, such as pointer pSmallId and pointer pLargeId. The pointer names indicate that the result flags in the circular structure 800 can be sorted by result ID. The circular structure 800 can be run through in both directions, e.g. to find the result flag of a particular result set. Sorting the result flags in the circular structure 800 by result ID helps to decide in which direction the circular structure should be searched for a fast identification of a certain result ID.

FIGs. 10 and 11 describe an implementation for applying the Boolean OR and AND operators to two result sets. These operators may be combined with a Boolean NOT operator. In this case, the data storage system runs through the docket elements of all IC-anchors and instantiates a result flag in a new result set each time when there is no result flag in the original result set where the NOT operator is applied to. At the end of the procedure the original result set is not used any more and can be deleted. Note that the InfoCourses are not needed to perform the inversion. Only the IC-anchors are used.

The number of hits as well as some or all of the InfoCourses that match the query may be returned to an application. As an example, assume that 20.000 InfoCourses are found. That is, the final result set contains 20.000 result flags. If an application requests the next 20 InfoCourses after the 5.390th InfoCourse from the data storage system, then the request can be satisfied by using the final result set. The result flag 5.390 (offset) is located by running down the final result set and counting the result flags until the offset result flag at position 5.390 is reached. The next 20 InfoCourses are read from the corresponding tree structures (e.g., by using the IC-anchors that relate to the corresponding docket elements). The retrieved values may be serialized, for example, into a Send-Buffer-Structure or any other kind of appropriate communication data structure. Any type of transport format and/or rearrangement, concatenation, etc. of data may be used for the Send-Buffer-Structure (e.g., the use of fixed lengths). Preferably, the application knows the data format provided by the data storage system to ensure stable communication.

For a fast localisation of a specific InfoCourse (e.g., number 5.390) it is useful to subdivide a result set into Intervals. One can use an interval pointer which points to the result flag in the middle of the result set (e.g., result flag 10.000 of 20.000) or to any other sub-interval of the result set, such as quarters. According to the offset requested by the application the data storage system can jump to the nearest interval pointer and then sequentially run through only a part of the result set (e.g., upwards or downwards) and count until the requested result flag (e.g., docket element D-FLAG) has been reached. It is useful to choose the direction having the shortest distance to the requested offset position. For example, assume that there are 20.000 result flags in the result set. If InfoCourse 15.390 is requested as an offset and no interval pointers are available, then it is advantageous to start at the bottom of the result set (result flag 20.000) and run through 20.000 - 15.390 + 1 = 4.611 result flags instead of starting at the top and run through 15.390 result flags. The same is true when using interval pointers.

In the previously explained implementation, the Boolean AND operator was applied to two result sets. In another implementation a "Lean AND" can be implemented in case only one result set exists as a result of one portion of the Boolean expression and this result set is to be combined with a single condition through a Boolean AND operator. The Query may have a syntax like: (<complex Subquery>) AND condition C1. Also for multiple non-nested conditions combined with AND at the same bracket level the "Lean AND" can be used. A syntax example for this kind of flat Boolean expression is: C1 AND C2 AND ... AND Cn, where Cn are conditions.

In these examples, only one result set exists and one or more conditions are to be combined with the Boolean AND operator.

Assume a Boolean expression, such as: C1 AND C2 AND ... AND Cn.

As explained before, the data storage system 902 is able to quickly find out which of the conditions C1 to Cn has the lowest number of hits, that is, the highest selectivity. The total number of hits in the intersection set of all conditions cannot be larger than the number of hits for the condition with the highest selectivity.

Therefore, the data storage system creates a result set for the condition with the highest selectivity, then runs through all result flags of the result set and checks for each result flag if the remaining conditions are fulfilled by the corresponding InfoCourse or not. In this implementation the InfoCourses are needed to check, for example, a condition NAME_FIRST = 'Peter'. The data storage system uses the relation from the result flag through the docking element to the corresponding IC-anchor, which points at the corresponding InfoCourse. The corresponding InfoCourse tree is then searched for the InfoType values according to the remaining conditions.

In this implementation, a second result set is not needed to be checked against the result set because the checking is directly performed on the related InfoCourses. As a consequence, the time to instantiate all the result flags of a second result set is saved by directly searching the InfoCourses matching the result set (already the most selective Condition) and checking directly if the corresponding values match or not.

For each result flag this check is performed for one or more conditions. For example, in a query C1 AND C2 AND C3 AND C4, a result set is instantiated for the most selective condition and for each result flag the three other conditions are checked accordingly. If at least one condition does not match, the corresponding result flag is deleted from the result set and the result counter is adjusted accordingly.

Finally, the result set flags all matching InfoCourses (records) and the result counter has the correct number of hits, which may be reported to an application.

For example, the "Lean AND" implementation can be advantageous when the time to instantiate the result flag instances of the second result flag exceeds the time to check the corresponding InfoCourses.

If the Boolean expression has only one single condition, result sets are not necessary. Result sets become valuable in case of a combination of several conditions in a corresponding query. In the particular case of only one condition the count result for the total number of hits is obtained by means of the tree structures as described in FIGs. 2 to 8. If InfoCourses have to be returned to an application, this can also be done by using the tree structures. Instead of a result set identifying the matching InfoCourses the tree nodes as such are used. For example, instead of running through a result set to visit all matching InfoCourses and collect the data into a Send-Buffer-Structure, only the matching sub-tree structures identified by the corresponding start pointers are traversed. As soon as the offset InfoCourse is found, only the number of InfoCourses has to be visited that is to be returned. For example, when 10 InfoCourses have to be returned to an application, only 10 nodes from the offset InfoCourse on have to be traversed in the corresponding InfoType sub-tree. From each node in an InfoType tree the corresponding anchor object can be reached, and from the anchor each attribute value of the given Info-Course can be reached.

FIGs. 13 to 15 illustrate a second implementation for the result flags C-FLAG1, C-FLAG2 and the result sets.

This second implementation is appropriate for very large result sets, where the first implementation would require many result flag instances eating up a lot of memory space of the data storage system.

FIG. 13 illustrates three bitmaps BM-n, BM-n+1, BM-n+2. In the example, the start of bitmap BM-n coincides with the basis address of bitmaps in the memory of the data storage system.

For example, a first bitmap BM-n corresponds to the first result set 361 and a second bitmap BM-n+2 corresponds to the second result set 362. The result flags C-FLAG1, C-FLAG2 are implemented as bits in the respective bitmaps.

A bitmap in general consists of multiple machine words. Depending on the hardware architecture of the data storage system, a machine word can consist, for example, of 32 or 64 bits. The second implementation also works with any other machine word length, such as 128 bit or more. A bitmap is a contiguous concatenation of machine words in a sufficiently large area of the data storage system memory. The number of bits in a (result set) bitmap corresponds to the number of IC-anchors of the InfoCourses selected by the Boolean expression 500. Therefore, each bitmap has the maximum size of a result set. Multiple bitmaps can simultaneously exist in the memory. Each bitmap (result set) is identified by a corresponding result ID. Each result ID points to the start address of its corresponding bitmap. For example, the first result ID 351 and the second result ID 352 point to the start address of the first bit map BM-n and the second bit map BM-n+2, respectively.

Assume, 5 million records (InfoCourses) are loaded into the tree structures of the data storage system. Therefore, 5 million IC-anchors exist and, in this example, one bitmap includes 5 million bits (one Bit per IC-anchor). The bitmap occupies 5.000.000 / 8 = 625.000 bytes = 610 KB. The 5 million bits correspond to 5.000.000 / 64 = 78.125 machine words on a 64 Bit hardware platform and to 5.000.000 / 32 = 156.250 machine words on a 32 Bit hardware platform. This example shows that a bitmap can be made up of tens of thousands or even more machine words. The number of machine words in a Bitmap is only physically limited by the size of the available main memory and the addressability of the main memory.

That is, each Bitmap may consist of a theoretically unlimited number of machine words, where the length of a machine word depends on the given hardware platform and/or the operating system of the data storage system. Each bitmap is referenced by a result ID. Preferably, the result IDs 351, 352 are stored in a tree structure allowing direct access to the start address of the corresponding bitmap via a pointer. In general, any structure (e.g., a linear list) can be used to administrate the result IDs. However, for large numbers of result IDs the access to a specific result set is more efficient when using a tree structure than when using a linear list or another structure.

When the start address of a specific bitmap has been found, this specific bitmap can be used to count the number of hits (number of result flags) or to return data to an application.

In the second implementation, each bitmap has a counter counting the Number of result flags, that is, the number of bits set to 1. To count the number of hits, the data storage system can run through all machine words of the bitmap. If a machine word has a value of zero, then all bits of the machine word are zero and the next machine word can be checked. For machine words having a value different from zero the data storage system determines the number of bits that are set to 1. This can be achieved by known methods, such as, shifting the bits of a machine word into one direction, testing with bit masks performing a bit by bit AND operation, etc. Each time a bit is set to 1, the counter is increased by 1. At the end of the procedure the counter value corresponds to the number of bits set to 1 and, therefore, the number of result flags in the corresponding result set.

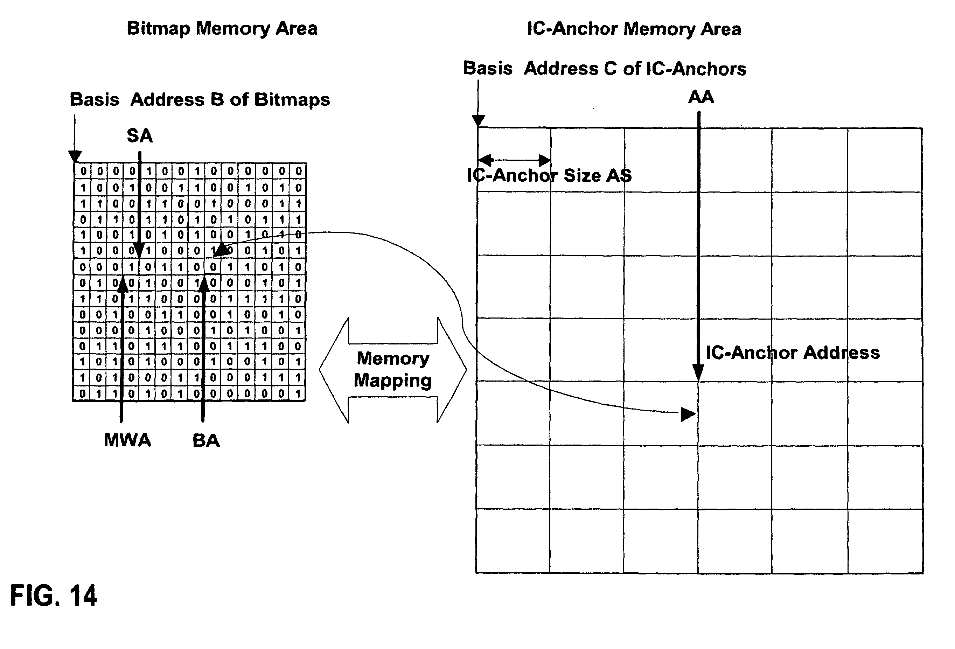

FIG. 14. illustrates how result flags relate to corresponding IC-anchors in the second implementation using memory mapping. The shown bits in the bitmap memory represent only a portion of the bitmap memory area.

In contrast to the first implementation, bits of bitmap and the corresponding IC anchors are not linked by pointers.

However, IC-anchors and their corresponding bits are related by a memory mapping rule using relative addresses. A memory manager of the data storage system can ensure that the IC-anchors and the bitmaps reside in contiguous memory areas. The data storage system can then locate any IC-anchor that relates to a specific bit in a bitmap.

For retrieving data (InfoCourses) in response to a query the data storage system identifies the corresponding IC-anchors. Using the IC-anchor and the corresponding InfoCourse tree a specific node in an Info-Type tree can be found and the value can be read from the node. The value can then be copied, for example, to a Send-Buffer-Structure as described earlier. To locate the specific bit that corresponds to the identified IC-anchor the data storage system can use an algorithm that works with relative addresses.

A specific bit is part of a machine word. Assume that this specific bit is bit number K. The machine word has a memory address MWA. The whole bitmap has a start address SA. For example, the relative address of the specific bit is calculated as BA = (MWA - SA) * 64 + K for 64 Bit long machine words and BA = (MWA - SA) * 32 + K for 32 Bit long machine words. At this memory location, the specific bit of the Bitmap can be checked. If it is set to 1, the InfoCourse with the corresponding IC-anchor is part of the result set.

The IC-anchor can be found in the IC-anchor memory area in the following way. All IC-anchors reside in the IC-anchor memory area with the basis address C. The size AS of an IC-anchor is known. Therefore, the IC-anchor address AA of the specific IC-anchor can be calculated as AA = C + BA * AS. Therefore, a pointer that is set to the address AA points to the requested IC-anchor.

When creating a result set bitmap in compliance with a portion of the Boolean expression, the result flag bits that relate to IC-anchors of the corresponding Info-Courses are set to 1. This can also be achieved by using relative addresses.

Each IC-anchor has a memory address AA. The basis address of the IC-anchor memory area is C. By knowing the size AS of an IC-anchor, the IC-anchor position number can be calculated as BA = (AA - C) / AS. That is, the result flag bit for the BAth IC-anchor is to be located in the bitmap memory area. The start address of a specific bitmap (result set identified by result ID) is SA. The machine word address MAW where the bit is located is calculated as MAW = SA + BA div 64 on a 64 bit hardware platform and MAW = SA + BA div 32 on a 32 bit hardware platform, where the div operator divides one integer number by another integer number and returns the integer part of the result. Within the identified machine word at MAW the Kth bit has to be set to 1 with K = BA mod 64 on a 64 bit hardware platform and K = BA mod 32 on a 32 bit hardware platform, where the mod operator divides two integer numbers and returns only the remainder. Alternatively, K could also be calculated as:

$$K = BA - (MAW - SA) * BS,$$

where $2^{BS}$ is the addressable number of bits in the used hardware platform/operating system.

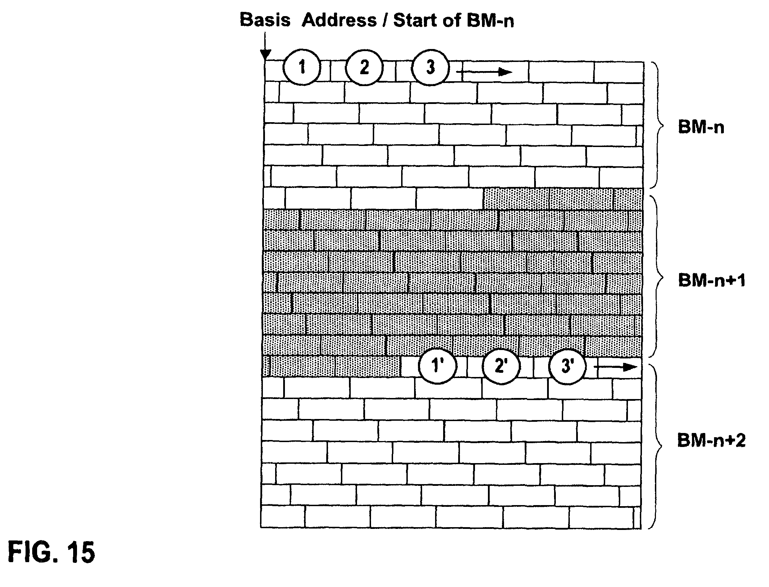

FIG. 15 illustrates, how AND/OR/NOT operators can be applied to the first and second bitmap BM-n, BM-n+2 by sequentially combining the corresponding pairs of machine words. The machine words are illustrated by cycles with a number that corresponds to the position of the machine word within its bitmap.

Machine word 1 of the first bitmap BM-n is combined with machine word 1' of the second bitmap BM-n+2. This is repeated for all pairs of machine words (2,2'), (3,3'), and so on, with respect to the first and second bitmaps. Since all IC-anchors are represented by a corresponding bit in each of the bitmaps, all bitmaps have the same size and, thus, contain the same number of machine words.

The logical combination of pairs of machine words by applying the Boolean AND or OR operators can be performed as a bit by bit AND or OR operation. Usually, the CPU (processor) can perform this in one processing cycle. Programming languages, such as C++, offer commands for this kind of bit by bit operations.

The result of the combination of first and second result set bitmaps may be written to a new, third bitmap (e.g., BM-n+1) or to one of the two original bitmaps BM-n, BM-n+2. This depends on whether the original bitmaps may be overwritten or are to be kept for later use.

After the processing of each pair of machine words the result flag counter counts how many bits are set to 1 in the resulting machine word. The sum of the counting results for all machine words of the resulting bitmap corresponds to the total number of bits set to 1 in the resulting bitmap and may be reported to an application as the number of hits.

The application of the Boolean NOT operator to a bitmap is performed as a bit by bit NOT operation applied to each machine word in the bitmap. Again, the result may overwrite the original bitmap or can be written to another bitmap if the original bitmap has to be kept for later use.

The "Lean AND", as described under FIG. 12, only needs one result set and can also be implemented when using bitmaps. For example, the Boolean expression includes five conditions that are combined by Boolean AND operators: C1 AND C2 AND C3 AND C4 AND C5. A result set bitmap is set up (as described in FIGs. 13, 14) for the condition with the highest selectivity of all conditions included in the Boolean expression. Then the data storage system runs through the bitmap from the first to the last bit. For each bit that is set to 1 the data storage system jumps to the corresponding InfoCourse and checks if all other Conditions are fulfilled by the corresponding InfoCourse. This check is performed in the same way as described in the implementation using result flag instances (cf. FIG. 12). If all conditions are true the bit keeps its value 1, otherwise the bit is set to 0. When a bit is set to 0, the corresponding result counter containing the number of bits that are set to 1 is reduced by 1. Therefore, the result counter contains always the current number of hits.

Alternatively, instead of getting the number of hits from the initial bitmap and reducing the counter each time a bit is set to 0 when an InfoCourse does not match the other conditions, the counter may also count the number of bits that are set to 1 in the bitmap after the "Lean AND" has been applied.

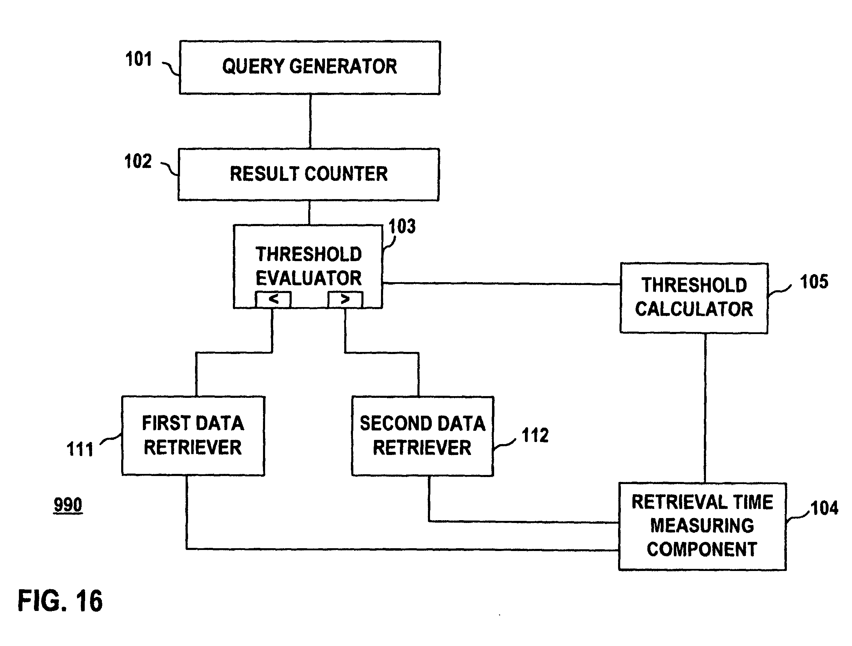

FIG. 16 is a simplified block diagram of software components of the computer system 990 that can be used with an embodiment of the invention to dynamically select a data retriever implementation in dependence of a specific environment.

A result set may potentially contain millions of result flags given a sufficiently large number of InfoCourses loaded. In the first implementation, for example, on a 64 bit architecture one pointer address occupies already 64 Bit (8 Bytes). Each result flag has at least two pointers plus the content of the result flag. Therefore, one result flag may occupy several hundreds of bytes. In this case, one result set containing some millions of result flags occupies memory space in the range of up to several hundreds of megabytes. This is in addition to the memory space occupied by the tree structures (cf. FIGs. 2 to 8) that also reside in main memory. Further, as the data storage system in the first implementation processes the result sets sequentially and checks result flag instance by result flag instance to perform AND/OR combinations, this may lead to processing times of several seconds for one combination when applied to very large result sets (e.g., several millions of result flag instances). One can apply an appropriate parallelisation to the first implementation or use the second implementation to overcome these issues.

The second implementation uses bitmaps for result sets. Bitmaps are a representation of result sets that consumes considerably less memory space than the result sets of the first implementation. Further, bit by bit Operations are performed very fast and can usually be handled in one CPU processing cycle per machine word, if supported by a programming language, such as C++.

For very large result sets (e.g., several millions of hits), it can be more time saving to perform Boolean combinations of result sets using bitmaps instead of pointer lists of result flag instances. Already the instantiation of millions of result flag instances may last several seconds if parallelisation is not used. In addition the time for performing the Boolean combination has to be considered. The Boolean combination of result flag instances is performed one by one at the instance level.

However, when a result set contains only a small number of hits then bitmaps may be "almost empty". That is, only a small number of bits is set to 1 in a large number of machine words (e.g., for 5 million Info-Courses a bitmap includes 78.125 machine words on a 64 bit platform). In a bad case only one bit is set to 1 in each machine word. Therefore, for small result sets the use of result flag instances may be advantageous.

The computer program product components in FIG. 16 allow the data storage system to switch from one implementation to another implementation if the other implementation is more advantageous in a specific environment. For example, this can be achieved by transforming pointer lists of the first implementation into bitmaps of the second implementation and vice versa. For these transformations the above explained procedures for creating result flag instances and for creating bitmaps can be used.

Advantageously, the data storage system decides by itself when it is appropriate to use the first implementation that is useful for small result sets having a number of result flags below a threshold value (e.g., up to several thousand elements) or the second implementation having a number of result flags above the threshold value. This enables the data storage system to automatically select the implementation which is best in terms of memory consumption and performance in a specific situation. It is not important, which implementation is used when the number of result flags equals the threshold value.

The threshold value may be a break even point being defined as the number of result flags in a result set, where the use of result flag instances leads to the same system performance as the use of bitmaps. The threshold value is not necessarily a predefined parameter of the data storage system but the data storage system can determine the threshold value dynamically, for example, by appropriate time measurements. Therefore, on a given technology platform for a given data volume, data value distribution, etc., the appropriate value for the threshold value can be used at all times.

The query generator 101 generates the query that includes the Boolean expression 500. For example, the query generator can be implemented on the front end computing device 901. The query generator 101 can also be part of an application that runs on any other computing device of the computer system 990.

Once the data storage system 902 receives the Boolean expression through a corresponding interface, the result counter 102 determines the corresponding number of hits. Preferably, the result counter is implemented in the data storage system 902.

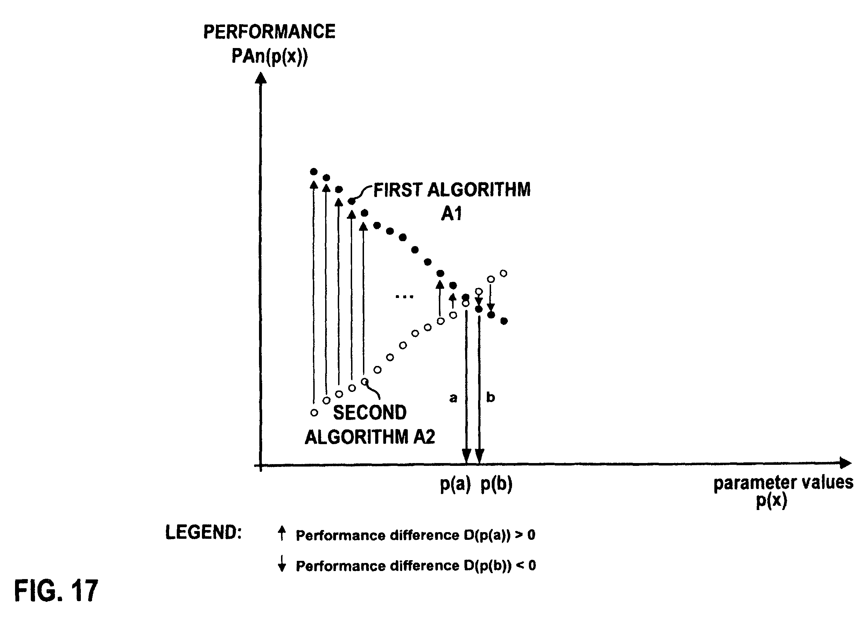

The threshold evaluator 103 compares the number of hits with the threshold value. Initially, the threshold value has a predefined value. FIG. 17 explains details about how to initialise the threshold value.

In case the number of hits (result flags) is below the threshold value, the data storage system uses the first data retriever 111. The first data retriever is configured according to the first implementation as described in FIG. 12.

In case the number of hits (result flags) is above the threshold value, the data storage system uses the second data retriever 112. The second data retriever is configured according to the second implementation as described in FIGs. 13 to 15.

The retrieval time measuring component 104 of the data storage system can measure the time that is consumed by either implementation for the various sizes of result sets.

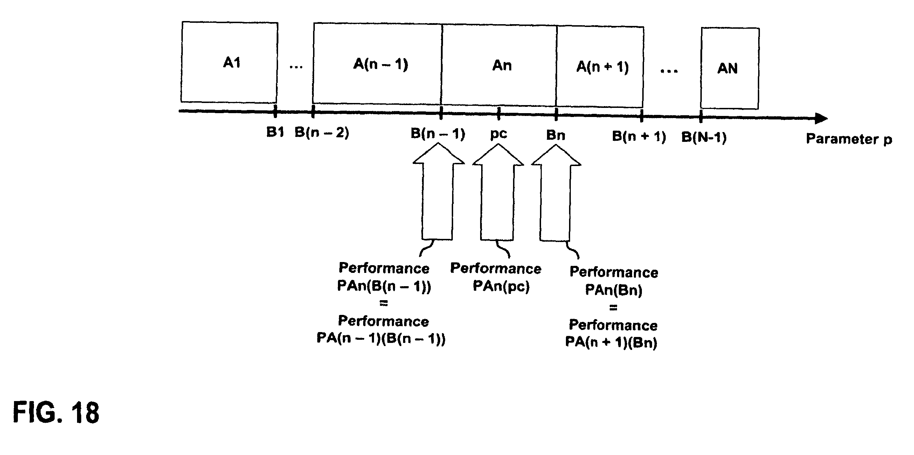

The threshold calculator 105 can dynamically determine (re-calculate) the threshold value on the basis of the time measurements with respect to the first and second implementations. The recalculated threshold value can be fed into the threshold evaluator 103 and used for the next query. For example, the threshold calculator 105 can superpose the measurement results for the first data retriever 111 with the measurement results of the second data retriever 112 and determine the number of hits, where both components consume the same time (break even point), by using an appropriate interpolation algorithm. More details about the threshold calculator are explained in FIG. 18.

In general, there can be multiple threshold values that correspond to more than two data retrievers. For example, if a further data retriever performs more advantageous than the second data retriever 112 for very large result sets (e.g., more than 10 million hits), then the threshold calculator can determine a further threshold value that corresponds to the break even point between the second data retriever and the further data retriever. In this case, the threshold evaluator 103 compares the count result of the result counter 102 to two threshold values and selects the appropriate data retriever out of at least three data retrievers.

Within a threshold value interval, there may be various data retrievers available, each of these data retrievers performing best in a given situation. For example, in the case of result sets below the threshold value, the first data retriever 111 (first implementation applied to two result sets) can be used when the Boolean expression has a certain degree of complexity. However, alternatively, a "Lean AND" data retriever can be used, when the Boolean expression has a simpler structure and requires only a single result set as explained under FIGs. 12 and 15.

That is, there can be further dependencies that are considered by the threshold evaluator when selecting the appropriate data retriever.

FIG. 17 illustrates initialising threshold values. Regarding the initial definition of threshold values, one alternative is to provide a profile parameter for each threshold value in the profile file for the software. Profile files are commonly used, for example, for defining buffer sizes, time out parameters, hardware configuration parameters, or parameters for determining software behaviour in specific situations, such as error handling. For example, some parameters may influence the performance of a software application. Usually, the setting of profile parameters requires a specialist who is familiar with the architecture of the software and has a good feeling for the way the software is influenced by the parameter settings. Furthermore, the specialist has to know the value ranges of each parameter. In practice, it turns out that the more profile parameters are available, the less likely it is that the specialist will succeed in tuning the software for optimal performance.

For this reason, an embodiment of the invention can be used to reduce the number of profile parameters to a necessary minimum. Specialists working from outside the software should tune only parameters that depend on a specific use case or business scenario, where pre-tuning of the software is difficult. For example, consider the pre-tuning of relational database management systems, and in particular deciding in advance which indexes to create, which depends on the final structure of the various tables in the database system.

In this embodiment of the invention, the software itself can tune scenario-independent profile parameters, such as the threshold values for the various implementations (cf. FIGs. 12 to 17). The initial values may be set during start-up of the software by running predefined test cases for the various implementations.

The example of FIG. 17 illustrates the automatic determination of a threshold value with regards to two algorithms A1 (illustrated by bullet points) and A2 (illustrated by circles). For example, the first algorithm A1 may be used by the first implementation and the second algorithm A2 may be used by the second implementation. In the example, a parameter p is tuned to a series of discrete values between a pair of chosen extreme values. The spacing of values between the extremes need not be very fine and can be equidistant. For each parameter value $p(x)$, a measurement is made of the performance difference $D(p(x))$ (defined as runtime difference or any other suitable measure) between the two algorithms. For example, the difference may be defined as $D(p(x)) = PA1(p(x)) - PA2(p(x))$. For each difference $D(p(x))$, either a single measurement is made or the average of several runs can be taken.

Below the threshold value, the performance of algorithm A1 decreases steadily with increasing parameter value $p(x)$ whereas the performance of algorithm A2 increases. So the magnitude of the performance difference $D(p(x))$ between the algorithms decreases but always has the same sign. For example, if $D(p(x)) = PA1(p(x)) - PA2(p(x)$, then the difference is positive as long as algorithm A1 has a better performance than algorithm A2.

The measured performance difference $D(p(a))$ for parameter value $p(a)$ is the last positive difference, so $p(a)$ is the greatest value of p such that $D(p) > 0$. From parameter value $p(b)$ onward, the difference is negative, so $p(b)$ is the least value of p such that $D(p) < 0$. The threshold lies in the interval between parameter values $p(a)$ and $p(b)$.

An iteration, for example based on an interval bisection procedure, can be used to locate the threshold parameter value within the interval $[p(a), p(b)]$.

For the first step of the iteration, the parameter value $p(a)$ is the left interval border, $p(b)$ is the right interval border and $p(c) = [p(b) - p(a)] / 2$ is the middle of the interval. A new measurement $D(p(c))$ of the performance difference between the two algorithms is made for parameter value $p(c)$.

If the difference is positive, $D(p(c)) > 0$, then the threshold value lies in the right half-interval $[p(c), p(b)]$.

If the difference is negative, $D(p(c)) < 0$, then the threshold value lies in the left half-interval $[p(a), p(c)]$.

If the difference is zero, D(p(c)) = 0, then the threshold value is determined exactly by the parameter value p(c) and the iteration is complete.

If the difference is greater than a predefined delta, the iteration continues. The half-interval containing the threshold value is subdivided into two smaller half-intervals (which are either [p(c), p(d)] and [p(d), p(b)] or [p(a), p(d)] and [p(d), p(c)], depending on whether D(p(c)) is positive or negative) and the performance difference D(p(d)) is evaluated for the parameter value p(d), and so on, as above.

The procedure stops as soon as the threshold value has been identified with sufficient precision. This may depend on:

The size of the measured difference D(p), for example, whether D(p) < delta, for some predefined minimal difference delta.

The type of the parameter, for example, whether p(x) is of type integer or floating point.

In this way, this embodiment of the invention can calculate initial values for all threshold values during start-up.

This start-up calculation can last for several milliseconds or even seconds before the software is up and running.

However, the software tunes itself automatically and optimally on the given environment (e.g. ,given hardware, operating system). It can be expected to do so more quickly, more exactly, and more inexpensively than a specialist could tune the software by manually setting profile parameters. FIG. 18 illustrates adjusting threshold values dynamically during operation by using the threshold calculator 105. There can be multiple algorithms A1 to AN, where each algorithm is used for a corresponding parameter value range of the parameter p. That is, each algorithm has at least one threshold value that represents a boundary of the corresponding parameter value range.

Assuming that the initial threshold values are correct at start-up and for some time after start-up, in the course of time, this situation may change, for example, because of memory fragmentation or accumulating memory leaks due to bugs in the coding or other reasons. Therefore, after a certain time the software can run under conditions that differ from those that prevailed immediately after start-up.

The performance of any of the algorithms A1 to AN may degrade or improve by different amounts relative to the other algorithms. Therefore, the corresponding threshold values may shift in the course of time.

This embodiment of the invention can automatically and regularly repeat its determination of its threshold values, as specified in the above calculation (cf. FIG. 17), so as to adjust the threshold values used to switch algorithms dynamically during runtime.

To revise its determination of threshold values, the software makes automatic performance measurements, for example, by using the time retrieval measuring component 104 (cf. FIG. 16). For example, the measurements can simply be records of the time taken for certain tasks to run. The measurements can be made either on an ongoing basis or from time to time.

When using ongoing performance measurements, the software measures the performance of each execution of an algorithm.

If the current execution of algorithm A1 corresponds to some value p(x) of parameter p that is below the threshold value B1, the performance PA1(p(x)) of algorithm A1 should in general be better than its performance at the corresponding threshold value B1, since this is the reason why the software executes algorithm A1 instead of algorithm A2 (see FIG. 17).

At the threshold value B1, the performance of algorithm A1 is by definition the same as that of algorithm A2, that is, PA1(B1) = PA2(B1).

In FIG. 18, for the algorithm An (1 < n < N) chosen in the interval between two neighbouring threshold values B(n - 1) and Bn, at the parameter value pc the performance PAn(pc) of the algorithm in that interval should be either the same as or better than its performance PAn(B(n - 1)) and PAn(Bn) at the upper and lower threshold values B(n) and B(n - 1).

If the performance PAn(pc) of algorithm An (middle arrow) is below its performance PAn(B(n - 1)) (left arrow) or PAn(Bn) (right arrow) at a neighbouring threshold value (either B(n - 1) or Bn, respectively), then it is no longer reasonable to choose algorithm An at parameter value pc.

Therefore, in future, at parameter value pc, the software chooses the algorithm that was earlier measured as performing better in the neighbouring parameter interval, which is either algorithm A(n - 1) or A(n + 1). This choice is equivalent to moving the threshold value B(n - 1) or Bn, respectively, to a new position at parameter value pc.

However, when algorithm A(n - 1) or A(n + 1) is next run at parameter value pc, it may be the case that the newly measured performance of the algorithm is also reduced, possibly even more so than the performance of the original algorithm An. In this case, the threshold value B(n - 1) or Bn, respectively, should not have been moved to the new position pc.

This situation may occur in practice because any reasons for the reduced performance of algorithm An may also apply to reduce the performance of algorithm A(n - 1) or A(n + 1).

Therefore, a situation like this can trigger a revised determination of all the threshold values, either immediately or as soon as practically possible, for example, when the system load is sufficiently low. Alternatively, the software can generate a system message to warn an administrator that the latest performance measurements indicate the need for a revised determination of the threshold values.

When using performance measurements from time to time, the software recalculates the threshold values preferably at times of low system load, in the same way that it does during start-up. This recalculation may be defined as part of a bundle of housekeeping tasks that are performed at regular intervals by the software. In this case, the threshold values are adjusted with a lower frequency than when using the ongoing basis alternative.

Removing as many profile parameters as possible from a profile file and letting the software itself tune such parameters instead of a specialist can lead to an improved system performance over the full range of parameter values.

However, in certain exceptional and rare situations, there may be good reasons why such parameters should not be tuned by the software but from outside by a specialist.

These exceptional cases can be handled as follows. By default, profile parameters that are tuned by the software itself do not appear in the profile file. However, if an expert explicitly sets a parameter value by entering it in the profile file, then the software does not change the value of this parameter.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

### Claims

1. A computer implemented method for retrieving data from a data storage system (902), where the data storage system (902) stores the data using a data structure with at least one instance of a first data type, hereinafter referred to as InfoCluster, representing a table associated with:

   - instances of a second data type, hereinafter referred to as InfoTypes, representing data attributes, and
   - instances of a third data type, hereinafter referred to as InfoCourses, representing data records, associated with said InfoTypes, wherein the InfoTypes are arranged in a first tree structure, and wherein the elements of an InfoCourse are arranged in a second tree structure, each InfoCourse (300, 301, 302, 303) having a record identifier, hereinafter referred to as InfoCourse anchor (310, 311, 312, 313),

the method comprising the steps of:

- receiving a query comprising a Boolean expression (500) that includes a first portion (501) and at least a second portion (502);
- determining a first result set (361) in compliance with the first portion (501) and at least a second result set (362) in compliance with the second portion (502),; and
- merging the first and the at least second result sets (361, 362) into a single result set (363); **characterized in that** the result sets (361, 362) each comprise respective result flags( C-FLAG1, C-FLAG2), each result flag being implemented as a bit being used to indicate whether a specific InfoCourse complies with a respective portion and being related to a corresponding result identification number (351, 352) and being related to the corresponding InfoCourse anchor (310, 311, 312, 313) through memory mapping;

wherein the result flags of the first and second result sets (361, 362) form a first bit map (BM-n) and a second bit map (BM-n+2), respectively; wherein the first result identification number (351) and the second result identification number (352) point to the start address of the first bit map (BM-n) and the second bit map (BM-n+2), respectively; and wherein the result identification numbers (351, 352) are stored in a tree structure.

2. Method according to claim 1, wherein the merging step comprises merging of the first and second bitmaps (BM-n, BM-n+2) in a bit by bit operation combining a machine word of the first bitmap (BM-n) with a corresponding machine word of the second bitmap (BM-n+2) in one processing cycle.

3. Method according to anyone of the claims 1 to 2, wherein the merging step starts with the result set (352) having the lowest number of result flags.

4. Method according to anyone of the claims 1 to 3, wherein the first and second portions (501, 502) comprise conditions that relate to InfoTypes.

5. A computer program product for retrieving data from a data storage system (902) in response to a Boolean expression (500) comprising a plurality of instructions that when loaded into a memory of the data storage system (902) cause at least one processor of the data storage system (902) to execute the steps of any of the claims 1 to 4.

6. A data storage system (902) comprising:

a memory to store data using a data structure with at least one instance of a first data type, hereinafter referred to as Info-Cluster, representing a table associated with:

- instances of a second data type, hereinafter referred to as InfoTypes, representing data attributes, and
- instances of a third data type, hereinafter referred to as InfoCourses, representing data records, associated with said InfoTypes, wherein the InfoTypes are arranged in a first tree structure, and wherein the elements of an InfoCourse are arranged in a second tree structure, each InfoCourse (300, 301, 302, 303) having a record identifier, hereinafter referred to as InfoCourse anchor (310, 311, 312, 313),

the system further operable to:

- receive a query comprising a Boolean expression (500) that includes a first portion (501) and at least a second portion (502);
- determine a first result set (361) in compliance with the first portion (501) and at least a second result set (362) in compliance with the second por tion (502),; and
- merge the first and the at least second result sets (361, 362) into a single result set (363); **characterized in that** the result sets (361, 362) each comprise respective result flags ( C-FLAG1, C-FLAG2), each result flag being implemented as a bit being used to indicate whether a specific InfoCourse complies with a respective portion and being related to a corresponding result identification number (351, 352) and being related to the corresponding InfoCourse anchor (310, 311, 312, 313) through memory mapping;

wherein the result flags of the first and second result sets (361, 362) form a first bit map (BM-n) and a second bit map (BM-n+2), respectively; wherein the first result identification number (351) and the second result identification number (352) point to the start address of the first bit map (BM-n) and the second bit map (BM-n+2), respectively; and wherein the result identification numbers (351, 352) are stored in a tree structure.

## Patentansprüche

1. Computerimplementiertes Verfahren zum Erhalten von Daten von einem Datenspeichersystem (902), wobei das Datenspeichersystem (902) die Daten mittels einer Datenstruktur mit zumindest einer Instanz einer ersten Datenart, im Folgenden als Info-Cluster bezeichnet, speichert, welche eine Tabelle darstellt, die assoziiert ist mit:

   - Instanzen einer zweiten Datenart, im Folgenden als InfoTypes bezeichnet, welche Datenattribute darstellen, und
   - Instanzen einer dritten Datenart, im Folgenden als InfoCourses bezeichnet, welche Datensätze bzw. -aufzeichnungen darstellen, die mit den InfoTypes assoziiert sind, wobei die InfoTypes in einer ersten Baumstruktur angeordnet sind, und wobei die Elemente eines InfoCourse in einer zweiten Baumstruktur angeordnet sind, wobei jeder InfoCourse (300, 301, 302, 303) einen Satz- bzw. Aufzeichnungsidentifikator, im Folgenden als InfoCourse anchor bezeichnet, (310, 311, 312, 313) aufweist,

   wobei das Verfahren die Schritte umfaßt:

   - Erhalten einer Abfrage, welche einen booleschen Ausdruck (500) umfaßt, welcher einen ersten Abschnitt bzw. Bereich (501) und zumindest einen zweiten Abschnitt bzw. Bereich (502) beinhaltet;
   - Bestimmen eines ersten Ergebnissatzes bzw. -gruppe (361) in Übereinstimmung mit dem ersten Abschnitt (501) und zumindest eines zweiten Ergebnissatzes bzw. -gruppe (362) in Übereinstimmung mit dem zweiten Abschnitt (502); und
   - Zusammenführen des ersten und des zumindest zweiten Ergebnissatzes (361, 362) zu einem einzelnen bzw. einzigen Ergebnissatz (363);
   **dadurch gekennzeichnet, daß** die Ergebnissätze (361, 362) jeder jeweilige Ergebnismarker bzw. -flags (C-FLAG1, C-FAG2) umfassen, wobei jeder Ergebnismarker als ein Bit implementiert wird, das verwendet wird, um anzugeben, ob ein spezifischer InforCourse einem jeweiligen Abschnitt bzw. Teil entspricht bzw. genügt, und das bzw. der in Beziehung zu einer entsprechenden Ergebnisidentifikationszahl (351, 352) gesetzt wird und in Beziehung zu der entsprechenden InfoCourse anchor (310, 311, 312, 313) gesetzt wird, und zwar durch Speicherabgleich bzw. -mapping;

   wobei die Ergebnismarker des ersten und des zweiten Ergebnissatzes (361, 362) eine erste Bitmap (BM-n) bzw. eine zweite Bitmap (BM-n+2) bilden; wobei die erste Ergebnisidentifikationszahl (351) und die zweite Ergebnisidentifikationszahl (352) auf die Startadresse der ersten Bitmap (BM-n) bzw. der zweiten Bitmap (BM-n+2) hinweisen; und wobei die Ergebnisidentifikationszahlen (351, 352) in einer Baumstruktur gespeichert werden.

2. Verfahren nach Anspruch 1, wobei der Zusammenführenschritt das Zusammenführen der ersten und der zweiten Bitmap (Bm-n, Bm-n+2) in einer Bit-für-Bit-Operation umfasst, welche ein Maschinenwort der ersten Bitmap (BM-n) mit einem entsprechenden Maschinenwort der zweiten Bitmap (BN-n+2) in einem Verarbeitungszyklus kombiniert.

3. Verfahren nach einem der Ansprüche 1 bis 2, wobei der Zusammenführenschritt mit dem Ergebnissatz (352), welcher die niedrigste Zahl an Ergebnismarkern aufweist, beginnt.

4. Verfahren nach einem der Ansprüche 1 bis 3, wobei der erste und der zweite Abschnitt (501, 502) Zustände umfassen, welche sich auf InfoTypes beziehen.

5. Computerprogrammprodukt zum Erhalten von Daten von einem Datenspeichersystem (902) ansprechend auf einen booleschen Ausdruck (500), welcher eine Vielzahl von Befehlen umfaßt, die, wenn sie in einen Speicher eines Datenspeichersystems (902) geladen sind, zumindest einen Prozessor des Datenspeichersystems (902) veranlassen, die Schritte von einem der Ansprüche 1 bis 4 auszuführen.

6. Datenspeichersystem (902) umfassend:

   einen Speicher zum Speichern von Daten unter Verwendung einer Datenstruktur mit zumindest einer Instanz einer ersten Datenart, im Folgenden als InfoCluster bezeichnet, welche eine Tabelle darstellt, die assoziiert ist mit:

   - Instanzen einer zweiten Datenart, im Folgenden als InfoTypes bezeichnet, welche Datenattribute darstellt, und
   - Instanzen einer dritten Datenart, im Folgenden als InfoCourses bezeichnet, welche Datensätze bzw. -aufzeichnungen darstellt, die mit den InfoTypes assoziiert sind, wobei die InfoTypes in einer ersten Baumstruktur angeordnet sind, und wobei die Elemente eines InfoCourse in einer zweiten Baumstruktur angeordnet sind, wobei jeder InfoCourse (300, 301, 302, 303) einen Satz- bzw. Aufzeichnungsidentifikator, im Folgenden als InfoCourse anchor bezeichnet, (310, 311, 312, 313) aufweist;

wobei das System ferner betriebsfähig ist zum:

- Erhalten einer Abfrage, welche einen booleschen Ausdruck (500) umfaßt, welcher einen ersten Abschnitt bzw. Bereich (501) und zumindest einen zweiten Abschnitt bzw. Bereich (502) beinhaltet;
- Bestimmen eines ersten Ergebnissatzes bzw. -gruppe (361) in Übereinstimmung mit dem ersten Abschnitt (501) und zumindest eines zweiten Ergebnissatzes bzw. -gruppe (362) in Übereinstimmung mit dem zweiten Abschnitt (502); und
- Zusammenführen des ersten und des zumindest zweiten Ergebnissatzes (361, 362) zu einem einzelnen bzw. einzigen Ergebnissatz (363);

**dadurch gekennzeichnet, daß** die Ergebnissätze (361, 362) jeder jeweilige Ergebnismarker bzw. -flags (C-FLAG1, C-FAG2) umfassen, wobei jeder Ergebnismarker als ein Bit implementiert wird, das verwendet wird, um anzugeben, ob ein spezifischer InforCourse einem jeweiligen Abschnitt bzw. Teil entspricht bzw. genügt, und das bzw. der in Beziehung zu einer entsprechenden Ergebnisidentifikationszahl (351, 352) gesetzt ist und in Beziehung zu der entsprechenden InfoCourse anchor (310, 311, 312, 313) gesetzt ist, und zwar durch Speicherabgleich bzw. -mapping;

wobei die Ergebnismarker des ersten und des zweiten Ergebnissatzes (361, 362) eine erste Bitmap (BM-n) bzw. eine zweite Bitmap (BM-n+2) bilden;

wobei die erste Ergebnisidentifikationszahl (351) und die zweite Ergebnisidentifikationszahl (352) auf die Startadresse der ersten Bitmap (BM-n) bzw. der zweiten Bitmap (BM-n+2) hinweisen; und

wobei die Ergebnisidentifikationszahlen (351, 352) in einer Baumstruktur gespeichert sind.

## Revendications

1. Procédé mis en oeuvre par ordinateur de récupération de données d'un système de stockage de données (902), où le système de stockage de données (902) stocke les données en utilisant une structure de données avec au moins une instance d'un premier type de données, désignée ci-après par Info-Cluster, représentant un tableau associé à :

- des instances d'un deuxième type de données, désignées ci-après par InfoTypes, représentant des attributs de données, et
- des instances d'un troisième type de données, désignées ci-après par InfoCourses, représentant des enregistrements de données, associées auxdits InfoTypes, dans lequel les InfoTypes sont agencés en une première arborescence et dans lequel les éléments d'un InfoCourse sont agencés en une seconde arborescence, chaque InfoCourse (300, 301, 302, 303) ayant un identifiant d'enregistrement, désigné ci-après par ancre InfoCourse (310, 311, 312, 313),

le procédé comprenant les étapes consistant à :

- recevoir une requête comprenant une expression booléenne (500) qui inclut une première portion (501) et au moins une seconde portion (502) ;
- déterminer un premier ensemble de résultats (361) conformément à la première portion (501) et au moins un second ensemble de résultats (362) conformément à la seconde portion (502) ; et
- fusionner le premier et l'au moins second ensembles de résultats (361, 362) en un seul ensemble de résultats (363) ;

**caractérisé en ce que** les ensembles de résultats (361, 362) comprennent chacun des drapeaux de résultat respectifs (C-FLAG1, C-FLAG2), chaque drapeau de résultat étant mis en oeuvre en tant que bit qui est utilisé pour indiquer si un InfoCourse spécifique se conforme à une portion respective et qui concerne un numéro d'identification de résultat correspondant (351, 352) et qui concerne l'ancre InfoCourse correspondante (310, 311, 312, 313) par mise en correspondance de mémoire ;

dans lequel les drapeaux de résultat des premier et second ensembles de résultats (361, 362) forment un premier bitmap (BM-n) et un second bitmap (BM-n+2), respectivement ;

dans lequel le premier numéro d'identification de résultat (351) et le second numéro d'identification de résultat (352) pointent vers l'adresse de départ du premier bitmap (BM-n) et du second bitmap (BM-n+2), respectivement ; et dans lequel les numéros d'identification de résultat (351, 352) sont stockés dans une arborescence.

2. Procédé selon la revendication 1, dans lequel l'étape de fusion comprend la fusion des premier et second bitmaps (BM-n, BM-n+2) dans une opération un bit à la fois combinant un mot machine du premier bitmap (BM-n) avec un mot machine correspondant du second bitmap (BM-n+2) dans un cycle de traitement.

3. Procédé selon l'une quelconque des revendications 1 à 2, dans lequel l'étape de fusion démarre avec l'ensemble de résultats (352) ayant le plus faible nombre de drapeaux de résultat.

4. Procédé selon l'une quelconque des revendications 1 à 3, dans lequel les première et seconde portions (501, 502) comprennent des conditions qui concernent des InfoTypes.

5. Produit de programme informatique de récupération de données d'un système de stockage de données (902) en réponse à une expression booléenne (500) comprenant une pluralité d'instructions qui, lors de leur chargement dans une mémoire du système de stockage de données (902), poussent au moins un processeur du système de stockage de données (902) à exécuter les étapes selon l'une quelconque des revendications 1 à 4.

6. Système de stockage de données (902) comprenant :

   une mémoire pour stocker des données en utilisant une structure de données avec au moins une instance d'un premier type de données, désignée ci-après par InfoCluster, représentant un tableau associé à :

      - des instances d'un deuxième type de données, désignées ci-après par InfoTypes, représentant des attributs de données, et
      - des instances d'un troisième type de données, désignées ci-après par InfoCourses, représentant des enregistrements de données, associées auxdits InfoTypes, dans lequel les InfoTypes sont agencés en une première arborescence et dans lequel les éléments d'un InfoCourse sont agencés en une seconde arborescence, chaque Info-Course (300, 301, 302, 303) ayant un identifiant d'enregistrement, désigné ci-après par ancre InfoCourse (310, 311, 312, 313), le système pouvant en outre opérer pour :
      - recevoir une requête comprenant une expression booléenne (500) qui inclut une première portion (501) et au moins une seconde portion (502) ;
      - déterminer un premier ensemble de résultats (361) conformément à la première portion (501) et au moins un second ensemble de résultats (362) conformément à la seconde portion (502) ; et
      - fusionner le premier et l'au moins second ensembles de résultats (361, 362) en un seul ensemble de résultats (363) ;

**caractérisé en ce que** les ensembles de résultats (361, 362) comprennent chacun des drapeaux de résultat respectifs (C-FLAG1, C-FLAG2), chaque drapeau de résultat étant mis en oeuvre en tant que bit qui est utilisé pour indiquer si un InfoCourse spécifique se conforme à une portion respective et qui concerne un numéro d'identification de résultat correspondant (351, 352) et qui concerne l'ancre InfoCourse correspondante (310, 311, 312, 313) par mise en correspondance de mémoire ;
dans lequel les drapeaux de résultat des premier et second ensembles de résultats (361, 362) forment un premier bitmap (BM-n) et un second bitmap (BM-n+2), respectivement ;
dans lequel le premier numéro d'identification de résultat (351) et le second numéro d'identification de résultat (352) pointent vers l'adresse de départ du premier bitmap (BM-n) et du second bitmap (BM-n+2), respectivement ; et
dans lequel les numéros d'identification de résultat (351, 352) sont stockés dans une arborescence.

FIG. 1

**FIG. 2**

EP 1 852 792 B1

FIG. 3

FIG. 4

EP 1 852 792 B1

**FIG. 5**

EP 1 852 792 B1

FIG. 6

FIG. 7

Info Cluster

Info Course

Id
first name

BOB

ALEX          JOE

2
DAVE          NICK

Id
age

30

25          1
35

22    27

LHR    RHR

Id
weight

88

3
81          102

65    98

| first name | age | weight |
|---|---|---|
| ... | ... | ... |
| DAVE | 35 | 81 |
| ... | ... | ... |

A

EP 1 852 792 B1

**FIG. 8**

FIG. 9

EP 1 852 792 B1

FIG. 10

**FIG. 11**

EP 1 852 792 B1

**FIG. 12**

Basis  Address / Start of BM-n

Machine Word Length

BM-n

BM-n+1

BM-n+2

352

351

8

4

12

2

6

10

14

1  3  5  7  9  11  13  15

FIG. 13

EP 1 852 792 B1

**Bitmap Memory Area**

**IC-Anchor Memory Area**

**Basis Address C of IC-Anchors**

AA

**Basis Address B of Bitmaps**

SA

IC-Anchor Size AS

Memory Mapping

IC-Anchor Address

MWA          BA

**FIG. 14**

EP 1 852 792 B1

FIG. 15

FIG. 16

EP 1 852 792 B1

FIG. 17

EP 1 852 792 B1

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0201026 W

- WO 02061612 A